# EUROPEAN PATENT APPLICATION

(11) **EP 4 841 382 A1**
(43) Date of publication of application: **18.11.2026**
(21) Application number: 24916574.7
(22) Date of filing: 19.11.2024
(51) Int. Cl.: G05D 3/12

(54) **LOUDNESS ADJUSTMENT METHOD AND APPARATUS, AND STORAGE MEDIUM AND ELECTRONIC DEVICE**

(30) Priority: 08.01.2024 CN 202410028841
(71) Applicant: Huizhou Vision New Technology Co., Ltd., Huizhou, Guangdong 516000 (CN)
(72) Inventor: CHEN, Xufeng, Huizhou, Guangdong 516000 (CN); CHEN, Wenjie, Huizhou, Guangdong 516000 (CN); GAO, Weibiao, Huizhou, Guangdong 516000 (CN)
(74) Representative: Murgitroyd & Company
(86) International application number: PCT/CN2024/132881
(87) International publication number: WO 2025/148524

(57) **Abstract**

The present application relates to the field of audio playback. Disclosed are a loudness adjustment method and apparatus, and a storage medium and an electronic device. The method comprises: measuring a first distance, a second distance, a first loudness and a second loudness; on the basis of the first distance and the second distance, calculating a loudness attenuation value; on the basis of the first loudness, the second loudness and the loudness attenuation value, calculating a loudness adjustment value; and on the basis of the loudness adjustment value, performing loudness equalization adjustment. The present application improves the loudness equalization effect of devices in a dual-device co-playback scenario.

## Description

The present application claims priority to Chinese Patent Application No. 202410028841.7, filed with the China National Intellectual Property Administration on January 8, 2024, and titled "LOUDNESS ADJUSTMENT METHOD AND APPARATUS, AND STORAGE MEDIUM AND ELECTRONIC DEVICE", the entire contents of which is incorporated herein by reference.

### TECHNICAL FIELD

The present application relates to the technical field of audio playback, and more specifically, to a loudness adjustment method, an apparatus, a storage medium, and an electronic device.

### BACKGROUND

In modern home entertainment, dual-device usage scenarios are becoming increasingly common. These scenarios include co-broadcasting scenarios where a first device (such as a television (TV)) and a second device (such as a Soundbar) collaboratively play the same audio (usually audio provided by the first device).

In a co-broadcasting scenario, although collaborative sound emission from the first device (such as a TV) and the second device (such as a Soundbar) can provide a better listening experience, the problem of unbalanced loudness is prone to occur, which leads to a poor listening experience for the user. To address the problem of unbalanced loudness, existing solutions typically involve manual adjustment based on manual loudness measurements or simple automatic loudness adjustment based on device distance.

### TECHNICAL PROBLEM

With current methods, there is often a problem of poor device loudness equalization effect in dual-device co-broadcasting scenarios, resulting in a poor user experience.

### SUMMARY

Embodiments of the present application provide a solution that can effectively improve the device loudness equalization effect in a dual-device co-broadcasting scenario, thereby enhancing the user experience.

Embodiments of the present application provide the following technical solutions:
According to an embodiment of the present application, a loudness adjustment method is provided, comprising: detecting a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device; calculating, according to the first distance and the second distance, a loudness attenuation value of the loudspeaker of the second device relative to the loudspeaker of the first device; calculating, according to the first loudness, the second loudness, and the loudness attenuation value, a loudness adjustment value for the loudspeaker of the second device; and performing, according to the loudness adjustment value, a loudness equalization adjustment on the second device in a co-broadcasting scenario, wherein in the co-broadcasting scenario, the first device and the second device collaboratively play the same audio.

In some embodiments of the present application, the first distance is detected by: obtaining a first noise playing time and a first noise receiving time of the first device for a first test noise; determining a first time difference as a difference between the first noise playing time and the first noise receiving time; and calculating, according to the first time difference, the first distance between the loudspeaker and the microphone in the first device.

In some embodiments of the present application, the second distance is detected by: obtaining a second noise playing time of the second device for a second test noise and a second noise receiving time of the first device for the second test noise; determining a second time difference as a difference between the second noise playing time and the second noise receiving time; and calculating, according to the second time difference, the second distance between the microphone of the first device and the second device.

In some embodiments of the present application, the first loudness is detected by: obtaining a first test signal received by the microphone of the first device, wherein the first test signal is a signal received when the loudspeaker of the first device plays a first test noise; and obtaining, according to the first test signal, the first loudness at the microphone of the first device.

In some embodiments of the present application, the second loudness is detected by: obtaining a second test signal received by the microphone of the first device, wherein the second test signal is a signal received when the loudspeaker of the second device plays a second test noise; and obtaining, according to the second test signal, the second loudness at the microphone of the first device.

In some embodiments of the present application, calculating the loudness attenuation value of the loudspeaker of the second device relative to the loudspeaker of the first device according to the first distance and the second distance comprises: calculating a distance ratio as a ratio of the first distance to the second distance; and performing a loudness attenuation calculation according to the distance ratio to obtain the loudness attenuation value of the loudspeaker of the second device relative to the loudspeaker of the first device.

In some embodiments of the present application, performing the loudness attenuation calculation according to the distance ratio to obtain the loudness attenuation value of the loudspeaker of the second device relative to the loudspeaker of the first device comprises: calculating the loudness attenuation value according to a formula P' = 20log₁₀(K), wherein P' represents the loudness attenuation value, and K represents the distance ratio.

In some embodiments of the present application, calculating the loudness adjustment value for the loudspeaker of the second device according to the first loudness, the second loudness, and the loudness attenuation value comprises: calculating a loudness difference as a difference between the first loudness and the second loudness; calculating a gain value as a sum of the loudness difference and the loudness attenuation value; and obtaining, according to the gain value, the loudness adjustment value for the loudspeaker of the second device.

In some embodiments of the present application, obtaining the loudness adjustment value for the loudspeaker of the second device according to the gain value comprises: determining a corresponding gain distribution range according to device types of the first device and the second device; performing a gain distribution processing within the gain distribution range of the gain value to obtain a plurality of gain distribution values; and using the plurality of gain distribution values as the loudness adjustment value for the loudspeaker of the second device.

According to an embodiment of the present application, a loudness adjustment apparatus is provided, the apparatus comprising: a detection module, configured to detect a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device; a first calculation module, configured to calculate, according to the first distance and the second distance, a loudness attenuation value of the loudspeaker of the second device relative to the loudspeaker of the first device; a second calculation module, configured to calculate, according to the first loudness, the second loudness, and the loudness attenuation value, a loudness adjustment value for the loudspeaker of the second device; and an adjustment module, configured to perform, according to the loudness adjustment value, a loudness equalization adjustment on the second device in a co-broadcasting scenario, wherein in the co-broadcasting scenario, the first device and the second device collaboratively play the same audio.

In some embodiments of the present application, the detection module is configured to: obtain a first noise playing time and a first noise receiving time of the first device for a first test noise; determine a first time difference as a difference between the first noise playing time and the first noise receiving time; and calculate, according to the first time difference, the first distance between the loudspeaker and the microphone in the first device.

In some embodiments of the present application, the detection module is configured to: obtain a second noise playing time of the second device for a second test noise and a second noise receiving time of the first device for the second test noise; determine a second time difference as a difference between the second noise playing time and the second noise receiving time; and calculate, according to the second time difference, the second distance between the microphone of the first device and the second device.

In some embodiments of the present application, the detection module is configured to: obtain a first test signal received by the microphone of the first device, wherein the first test signal is a signal received when the loudspeaker of the first device plays a first test noise; and obtain, according to the first test signal, the first loudness at the microphone of the first device.

In some embodiments of the present application, the detection module is configured to: obtain a second test signal received by the microphone of the first device, wherein the second test signal is a signal received when the loudspeaker of the second device plays a second test noise; and obtain, according to the second test signal, the second loudness at the microphone of the first device.

In some embodiments of the present application, the first calculation module is configured to: calculate a distance ratio as a ratio of the first distance to the second distance; and perform a loudness attenuation calculation according to the distance ratio to obtain the loudness attenuation value of the loudspeaker of the second device relative to the loudspeaker of the first device.

In some embodiments of the present application, the first calculation module is configured to: calculate the loudness attenuation value according to the formula P' = 20log₁₀(K), wherein P' represents the loudness attenuation value, and K represents the distance ratio.

In some embodiments of the present application, the second calculation module is configured to: calculate a loudness difference as a difference between the first loudness and the second loudness; calculate a gain value as a sum of the loudness difference and the loudness attenuation value; and obtain, according to the gain value, the loudness adjustment value for the loudspeaker of the second device.

In some embodiments of the present application, the second calculation module is configured to: determine a corresponding gain distribution range according to device types of the first device and the second device; perform a gain distribution processing within the gain distribution range of the gain value to obtain a plurality of gain distribution values; and use the plurality of gain distribution values as the loudness adjustment value for the loudspeaker of the second device.

According to another embodiment of the present application, a storage medium is provided, on which a computer program is stored, wherein when the computer program is executed by a processor of a computer, the computer is caused to perform the method described in the embodiments of the present application.

According to another embodiment of the present application, an electronic device may comprise: a memory storing a computer program; and a processor configured to read the computer program stored in the memory to perform the method described in the embodiments of the present application.

According to another embodiment of the present application, a computer program product or a computer program is provided, wherein the computer program product or the computer program comprises computer instructions stored in a computer-readable storage medium. A processor of a computer device reads the computer instructions from the computer-readable storage medium, and the processor executes the computer instructions, causing the computer device to perform the method provided in the various optional implementations described in the embodiments of the present application.

### BENEFICIAL EFFECTS

In embodiments of the present application, a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device are detected; a loudness attenuation value of the loudspeaker of the second device relative to the loudspeaker of the first device is calculated according to the first distance and the second distance; a loudness adjustment value for the loudspeaker of the second device is calculated according to the first loudness, the second loudness, and the loudness attenuation value; and a loudness equalization adjustment is performed on the second device in a co-broadcasting scenario according to the loudness adjustment value, wherein in the co-broadcasting scenario, the first device and the second device collaboratively play the same audio.

In this way, in a dual-device co-broadcasting scenario, by detecting the first distance, the second distance, the first loudness, and the second loudness, calculating a loudness attenuation value of the loudspeaker of the second device relative to the loudspeaker of the first device according to the first distance and the second distance, and calculating a loudness adjustment value for the loudspeaker of the second device according to the first loudness, the second loudness, and the loudness attenuation value, a loudness equalization adjustment is performed on the second device in the co-broadcasting scenario. This can effectively equalize the loudness of the first device and the second device, improve the device loudness equalization effect in the dual-device co-broadcasting scenario, and enhance the user experience.

### BRIEF DESCRIPTION OF THE DRAWINGS

To illustrate the technical solutions in the embodiments of the present application more clearly, the accompanying drawings used in the description of the embodiments are briefly introduced below. Obviously, the drawings in the following description are merely some embodiments of the present application. A person of ordinary skill in the art may derive other drawings from these drawings without creative effort.
FIG. 1 shows a flowchart of a loudness adjustment method according to an embodiment of the present application.
FIG. 2 shows a flowchart for calculating a loudness attenuation value according to an embodiment of the present application.
FIG. 3 shows a flowchart for calculating a loudness adjustment value according to an embodiment of the present application.
FIG. 4 shows a block diagram of a loudness adjustment apparatus according to an embodiment of the present application.
FIG. 5 shows a block diagram of an electronic device according to an embodiment of the present application.

### DETAILED DESCRIPTION OF EMBODIMENTS

The present disclosure will be described in further detail below with reference to the accompanying drawings and embodiments. It should be understood that the embodiments provided herein are only for explaining the present disclosure and are not intended to limit the present disclosure. In addition, the embodiments provided below are some, but not all, embodiments for implementing the present disclosure. The technical solutions described in the embodiments of the present disclosure can be implemented in any combination without conflict.

It should be noted that in the embodiments of the present disclosure, the terms "comprising," "including," or any other variants thereof are intended to cover a non-exclusive inclusion, such that a method or apparatus that comprises a series of elements includes not only the explicitly recited elements, but also other elements not explicitly listed, or elements inherent to such a method or apparatus. Without further limitations, an element defined by the phrase "comprising a..." does not preclude the existence of other relevant elements in the method or apparatus that comprises the element (e.g., steps in a method or units in an apparatus, where a unit may be a partial circuit, a partial processor, a partial program or software, etc.).

For example, a loudness adjustment method provided in an embodiment of the present disclosure includes a series of steps, but the loudness adjustment method is not limited to the described steps. Similarly, a loudness adjustment apparatus provided in an embodiment of the present disclosure includes a series of units, but the apparatus is not limited to the explicitly recited units, and may also include units necessary for acquiring relevant information or for processing based on the information.

Unless otherwise defined, all technical and scientific terms used herein have the same meaning as commonly understood by one of ordinary skill in the art to which this disclosure belongs. The terminology used herein is for the purpose of describing specific embodiments only and is not intended to be limiting of the present disclosure.

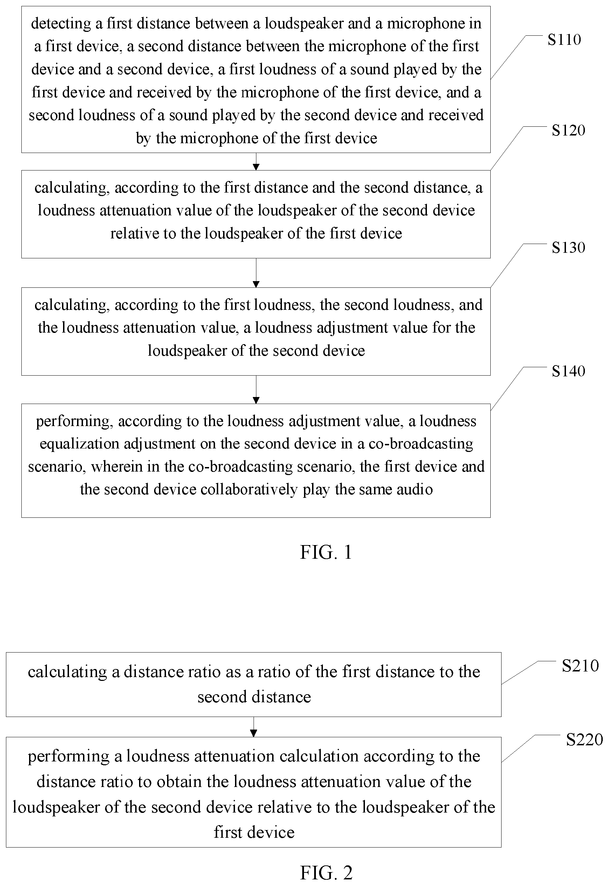

FIG. 1 schematically shows a flowchart of a loudness adjustment method according to an embodiment of the present application. The execution entity of the loudness adjustment method can be any device or server with processing capabilities. The device can be, for example, a television, a computer, a mobile phone, a smartwatch, or a home appliance, and the server can be, for example, a cloud server or a physical server.

In an embodiment of the present application, the execution entity of the loudness adjustment method is a device. The device can be the first device or the second device, or it can be another device other than the first device and the second device (for example, a mobile phone held by a user).

As shown in FIG. 1, the loudness adjustment method may include steps S110 to S140.

Step S110, detecting a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device. Step S120, calculating, according to the first distance and the second distance, a loudness attenuation value of the loudspeaker of the second device relative to the loudspeaker of the first device. Step S130, calculating, according to the first loudness, the second loudness, and the loudness attenuation value, a loudness adjustment value for the loudspeaker of the second device. Step S140, performing, according to the loudness adjustment value, a loudness equalization adjustment on the second device in a co-broadcasting scenario, wherein in the co-broadcasting scenario, the first device and the second device collaboratively play the same audio.

In a dual-device co-broadcasting scenario, relevant detection is performed for the first device and the second device. Through this detection, the first distance, the second distance, the first loudness, and the second loudness are obtained.

The first distance is the distance between the loudspeaker and the microphone in the first device (e.g., a television), and the second distance is the distance between the microphone in the first device (e.g., a television) and the second device (e.g., a soundbar).

The first loudness is the loudness measured at the microphone of the first device when the microphone receives the sound played by the local device (i.e., the sound played by the loudspeaker of the first device). The second loudness is the loudness measured at the microphone of the first device when the microphone receives the sound played by the second device.

By calculating based on the first distance and the second distance, the loudness attenuation value of the loudspeaker of the second device relative to the loudspeaker of the first device can be obtained. This loudness attenuation value can reflect the degree of loudness attenuation of the loudspeaker of the second device relative to the loudspeaker of the first device based on the current positions of the first and second devices.

By calculating based on the first loudness, the second loudness, and the loudness attenuation value, the loudness adjustment value for the loudspeaker of the second device is obtained. A loudness equalization adjustment is performed on the second device in the co-broadcasting scenario according to this loudness adjustment value (specifically, the loudness of the second device can be increased by the loudness adjustment value), which can effectively achieve device loudness equalization in a dual-device co-broadcasting scenario. In this co-broadcasting scenario, the first device and the second device collaboratively play the same audio.

In this way, based on steps S110 to S140, in a dual-device co-broadcasting scenario, by detecting the first distance, the second distance, the first loudness, and the second loudness, calculating a loudness attenuation value of the loudspeaker of the second device relative to the loudspeaker of the first device according to the first distance and the second distance, and calculating a loudness adjustment value for the loudspeaker of the second device according to the first loudness, the second loudness, and the loudness attenuation value, a loudness equalization adjustment is performed on the second device in the co-broadcasting scenario. This can effectively equalize the loudness of the first device and the second device in the dual-device co-broadcasting scenario, improve the device loudness equalization effect, and enhance the user experience.

Further optional specific implementations for each step of the loudness adjustment method in the embodiment of FIG. 1 are described below.

In an embodiment, the first distance is detected by: obtaining a first noise playing time and a first noise receiving time of the first device for a first test noise; determining a first time difference as a difference between the first noise playing time and the first noise receiving time; and calculating, according to the first time difference, the first distance between the loudspeaker and the microphone in the first device.

The first device and the second device can be connected in a wired or wireless manner. The first device is controlled to play a segment of a first test noise while the microphone of the first device also receives sound. Then, the start time of playing the first test noise by the first device (i.e., the first noise playing time) can be detected.

The microphone of the first device can receive the played first test noise to obtain a received noise signal S1. The start time of the noise signal S1 received by the first device (i.e., the first noise receiving time) can be detected. The difference between the first noise playing time t1 and the first noise receiving time t2 is calculated to obtain the first time difference *Δ*t₁.

Furthermore, in some implementations, according to the first time difference *Δ*t₁, the first distance l₁ between the loudspeaker and the microphone in the first device is calculated according to the formula l₁ = c * *Δ*t₁ (where c represents the speed of sound).

Furthermore, in another implementation, the first distance l₁ between the loudspeaker and the microphone in the first device is calculated according to the formula l₁ = m1 * c * *Δ*t₁ (where c represents the speed of sound). This can further enhance the effect of the first distance on the loudness equalization adjustment, thereby further improving the overall loudness equalization effect.

m1 can be a first distance adjustment coefficient. m1 may have a one-to-one correspondence with a device placement feature of the first device. The device placement feature of the first device can be obtained by performing image detection on a device placement image containing the first device. The device placement feature of the first device can reflect characteristics such as the placement position and surrounding environment of the first device in a space. The device placement image of the first device can be captured by a camera.

In an embodiment, the second distance is detected by: obtaining a second noise playing time of the second device for a second test noise and a second noise receiving time of the first device for the second test noise; determining a second time difference as a difference between the second noise playing time and the second noise receiving time; and calculating, according to the second time difference, the second distance between the microphone of the first device and the second device.

The second device is controlled to play a segment of a second test noise while the microphone of the first device also receives sound. Then, the start time of playing the second test noise by the second device (i.e., the second noise playing time) can be detected.

The microphone of the first device can receive the played second test noise to obtain a received noise signal S2. The start time of the noise signal S2 received by the first device (i.e., the second noise receiving time) can be detected. The difference between the second noise playing time t3 and the second noise receiving time t4 is calculated to obtain the second time difference *Δ*t₂.

Furthermore, in some implementations, according to the second time difference *Δ*t₂, the second distance l₂ between the microphone of the first device and the second device is calculated according to the formula l₂ = c * *Δ*t₂ (where c represents the speed of sound).

Furthermore, in some implementations, according to the second time difference *Δ*t₂, the second distance l₂ between the microphone of the first device and the second device is calculated according to the formula l₂ = m2 * c * *Δ*t₂ (where c represents the speed of sound). This can further enhance the effect of the second distance on the loudness equalization adjustment, thereby further improving the overall loudness equalization effect.

m2 can be a second distance adjustment coefficient. m2 may have a one-to-one correspondence with a combined device placement feature of the first device and the second device. The combined device placement feature of the first device and the second device can be obtained by performing image detection on a device placement image containing the first device and the second device. The combined device placement feature of the first device and the second device can comprehensively reflect characteristics such as the placement positions and surrounding environment of the first device and the second device in a space. The device placement image containing the first device and the second device can be captured by a camera.

In an embodiment, the first loudness is detected by: obtaining a first test signal received by the microphone of the first device, wherein the first test signal is a signal received when the loudspeaker of the first device plays a first test noise; and obtaining, according to the first test signal, the first loudness at the microphone of the first device.

The first device is controlled to play a segment of a first test noise while the microphone of the first device also receives sound. Then, the microphone of the first device can receive the played first test noise to obtain a received noise signal S1. The noise signal S1 is the first test signal.

According to the first test signal, the first loudness P1 at the microphone of the first device when the loudspeaker of the first device plays the first test noise can be calculated.

In an embodiment, the second loudness is detected by: obtaining a second test signal received by the microphone of the first device, wherein the second test signal is a signal received when the loudspeaker of the second device plays a second test noise; and obtaining, according to the second test signal, the second loudness at the microphone of the first device.

The second device is controlled to play a segment of a second test noise while the microphone of the first device also receives sound. Then, the microphone of the first device can receive the played second test noise to obtain a received noise signal S2. The noise signal S2 is the second test signal.

According to the second test signal, the second loudness P2 at the microphone of the first device when the loudspeaker of the second device plays the second test noise can be calculated.

Furthermore, in an embodiment of the present application, the first test noise and the second test noise are pink noise. Pink noise, also known as 1/f noise or fractal noise, is a sound signal with specific power spectral characteristics across frequencies. Using pink noise as the first test noise and the second test noise can further improve the effect of the loudness equalization adjustment.

In an embodiment, referring to FIG. 2, calculating the loudness attenuation value of the loudspeaker of the second device relative to the loudspeaker of the first device according to the first distance and the second distance may include: Step S210, calculating a distance ratio as a ratio of the first distance to the second distance; Step S220, performing a loudness attenuation calculation according to the distance ratio to obtain the loudness attenuation value of the loudspeaker of the second device relative to the loudspeaker of the first device.

The ratio of the first distance to the second distance is calculated to obtain a distance ratio. This distance ratio reflects the ratio of the distance between the loudspeaker of the first device and the microphone of the first device to the distance between the microphone of the first device and the second device.

By performing a loudness attenuation calculation according to the distance ratio, the loudness attenuation value of the loudspeaker of the second device relative to the loudspeaker of the first device can be accurately obtained. This loudness attenuation value can accurately reflect the degree of loudness attenuation of the loudspeaker of the second device relative to the loudspeaker of the first device based on the current positions of the first and second devices.

In an embodiment, calculating the loudness attenuation value of the loudspeaker in the second device relative to the loudspeaker in the first device according to the distance ratio may specifically include: calculating the loudness attenuation value according to the formula P' = 20log₁₀(K), where P' represents the loudness attenuation value, and K represents the distance ratio.

The loudness attenuation value P' calculated according to the formula P' = 20log₁₀(K) is used for loudness equalization adjustment, which can effectively ensure the loudness equalization adjustment effect.

It can be understood that, in other embodiments, the loudness attenuation value of the loudspeaker in the second device relative to the loudspeaker in the first device may be calculated according to the distance ratio using other formulas (for example, P'=15log₁₀(K))).

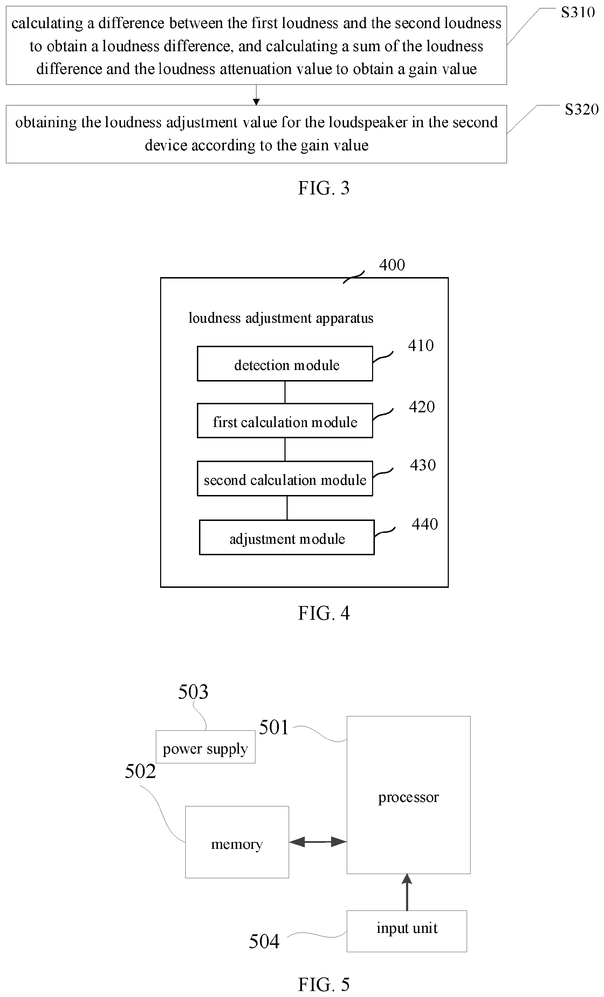

In an embodiment, with reference to FIG. 3, calculating the loudness adjustment value for the loudspeaker in the second device according to the first loudness, the second loudness, and the loudness attenuation value may include: step S310, calculating a difference between the first loudness and the second loudness to obtain a loudness difference, and calculating a sum of the loudness difference and the loudness attenuation value to obtain a gain value; and step S320, obtaining the loudness adjustment value for the loudspeaker in the second device according to the gain value.

A difference between the first loudness P1 and the second loudness P2 is calculated to obtain a loudness difference P1-P2. A sum of the loudness difference P1-P2 and the loudness attenuation value P' is calculated to obtain a gain value P0, where P0 = P1 - P2 + P'. The loudness adjustment value for the loudspeaker in the second device can be obtained according to the gain value P0.

In some implementations, obtaining the loudness adjustment value for the loudspeaker in the second device according to the gain value may specifically be: using the gain value as the loudness adjustment value for the loudspeaker in the second device.

In some implementations, obtaining the loudness adjustment value for the loudspeaker in the second device according to the gain value may include: determining a corresponding gain distribution range according to device types of the first device and the second device; performing a gain distribution process within the gain distribution range of the gain value to obtain a plurality of gain distribution values; and using the plurality of gain distribution values as the loudness adjustment value for the loudspeaker in the second device.

The device types of the first device and the second device can be the device models of the first device and the second device. The corresponding gain distribution range can be determined by querying a predetermined range table based on the device types of the first device and the second device.

A gain distribution process is performed within the gain distribution range of the gain value to obtain a plurality of gain distribution values. For example, if the gain value is P0 and the gain distribution range is -5 to +5, the gain distribution range for the gain value is from P0-5 to P0+5. A plurality of uniformly distributed values (that is, the plurality of gain distribution values) are generated at predetermined intervals within this range from P0-5 to P0+5.

Using the plurality of gain distribution values as the loudness adjustment value for the loudspeaker of the second device allows for the plurality of gain distribution values to be cyclically used for loudness equalization adjustment in a dual-device co-broadcasting scenario. This can provide a good loudness equalization effect even when the devices are placed in different environments.

To facilitate better implementation of the loudness adjustment method provided in the embodiments of the present application, an embodiment of the present application also provides a loudness adjustment apparatus based on the foregoing loudness adjustment method. The meanings of the terms therein are the same as in the foregoing loudness adjustment method, and specific implementation details can be referred to in the description of the method embodiments. FIG. 4 shows a block diagram of a loudness adjustment apparatus according to an embodiment of the present application.

As shown in FIG. 4, a loudness adjustment apparatus 400 may include: a detection module 410, configured to detect a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device; a first calculation module 420, configured to calculate, according to the first distance and the second distance, a loudness attenuation value of the loudspeaker of the second device relative to the loudspeaker of the first device; a second calculation module 430, configured to calculate, according to the first loudness, the second loudness, and the loudness attenuation value, a loudness adjustment value for the loudspeaker of the second device; and an adjustment module 440, configured to perform, according to the loudness adjustment value, a loudness equalization adjustment on the second device in a co-broadcasting scenario, where in the co-broadcasting scenario, the first device and the second device collaboratively play the same audio.

In some embodiments of the present application, the detection module is configured to: obtain a first noise playing time and a first noise receiving time of the first device for a first test noise; determine a first time difference as a difference between the first noise playing time and the first noise receiving time; and calculate, according to the first time difference, the first distance between the loudspeaker and the microphone in the first device.

In some embodiments of the present application, the detection module is configured to: obtain a second noise playing time of the second device for a second test noise and a second noise receiving time of the first device for the second test noise; determine a second time difference as a difference between the second noise playing time and the second noise receiving time; and calculate, according to the second time difference, the second distance between the microphone of the first device and the second device.

In some embodiments of the present application, the detection module is configured to: obtain a first test signal received by the microphone of the first device, where the first test signal is a signal received when the loudspeaker of the first device plays a first test noise; and obtain, according to the first test signal, the first loudness at the microphone of the first device.

In some embodiments of the present application, the detection module is configured to: obtain a second test signal received by the microphone of the first device, where the second test signal is a signal received when the loudspeaker of the second device plays a second test noise; and obtain, according to the second test signal, the second loudness at the microphone of the first device.

In some embodiments of the present application, the first calculation module is configured to: calculate a distance ratio as a ratio of the first distance to the second distance; and perform a loudness attenuation calculation according to the distance ratio to obtain the loudness attenuation value of the loudspeaker of the second device relative to the loudspeaker of the first device.

In some embodiments of the present application, the first calculation module is configured to: calculate the loudness attenuation value according to a formula P' = 20log₁₀(K), where P' represents the loudness attenuation value, and K represents the distance ratio.

In some embodiments of the present application, the second calculation module is configured to: calculate a loudness difference as a difference between the first loudness and the second loudness; calculate a gain value as a sum of the loudness difference and the loudness attenuation value; and obtain, according to the gain value, the loudness adjustment value for the loudspeaker of the second device.

In some embodiments of the present application, the second calculation module is configured to: determine a corresponding gain distribution range according to device types of the first device and the second device; perform a gain distribution process within the gain distribution range of the gain value to obtain a plurality of gain distribution values; and use the plurality of gain distribution values as the loudness adjustment value for the loudspeaker of the second device.

It should be noted that, although several modules or units of the apparatus for performing actions are mentioned in the detailed description above, such a division is not mandatory. In fact, according to the embodiments of the present application, the features and functions of two or more modules or units described above may be embodied in a single module or unit. Conversely, the features and functions of one module or unit described above may be further divided and embodied by a plurality of modules or units.

In addition, an embodiment of the present application also provides an electronic device, as shown in FIG. 5. FIG. 5 shows a block diagram of an electronic device according to an embodiment of the present application. Specifically:
The electronic device may include components such as a processor 501 with one or more processing cores, a memory 502 with one or more computer-readable storage media, a power supply 503, and an input unit 504. A person skilled in the art can understand that the structure of the electronic device shown in FIG. 5 does not constitute a limitation on the electronic device; it may include more or fewer components than shown, or combine certain components, or have a different arrangement of components. The components are described as follows:
The processor 501 is the control center of the electronic device, connects various parts of the entire electronic device using various interfaces and lines, and by running or executing software programs and/or modules stored in the memory 502, and calling data stored in the memory 502, performs various functions and processes data of the electronic device, thereby monitoring the entire electronic device. Optionally, the processor 501 may include one or more processing cores. Preferably, the processor 501 may integrate an application processor and a modem processor, where the application processor mainly handles the operating system, user interfaces, and applications, etc., and the modem processor mainly handles wireless communication. It can be understood that the aforementioned modem processor may also not be integrated into the processor 501.

The memory 502 can be used to store software programs and modules, and the processor 501 executes various functional applications and data processing by running the software programs and modules stored in the memory 502. The memory 502 may mainly include a program storage area and a data storage area, where the program storage area may store an operating system, applications required for at least one function (such as an audio playback function, an image playback function, etc.), and the like; the data storage area may store data created according to the use of the electronic device, and the like. In addition, the memory 502 may include high-speed random-access memory, and may also include non-volatile memory, such as at least one disk storage device, flash memory device, or other volatile solid-state storage device. Correspondingly, the memory 502 may also include a memory controller to provide the processor 501 with access to the memory 502.

The electronic device also includes a power supply 503 that supplies power to various components. Preferably, the power supply 503 can be logically connected to the processor 501 through a power management system, thereby implementing functions such as managing charging, discharging, and power consumption through the power management system. The power supply 503 may also include any components such as one or more DC or AC power supplies, a recharging system, a power failure detection circuit, a power converter or inverter, and a power status indicator.

The electronic device may also include an input unit 504, which may be used to receive input digital or character information, and generate keyboard, mouse, joystick, optical, or trackball signal inputs related to user settings and function control.

Although not shown, the electronic device may also include a display unit and the like, which are not described in detail herein. Specifically, in this embodiment, the processor 501 in the electronic device will load an executable file corresponding to a process of one or more computer programs into the memory 502 according to instructions, and the computer program stored in the memory 502 is run by the processor 501, thereby implementing the various functions in the foregoing embodiments of the present application. For example, the processor 501 can execute the following steps:
detecting a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device;
calculating, according to the first distance and the second distance, a loudness attenuation value of the loudspeaker of the second device relative to the loudspeaker of the first device;
calculating, according to the first loudness, the second loudness, and the loudness attenuation value, a loudness adjustment value for the loudspeaker of the second device; and
performing, according to the loudness adjustment value, a loudness equalization adjustment on the second device in a co-broadcasting scenario, where in the co-broadcasting scenario, the first device and the second device collaboratively play the same audio.

In some embodiments of the present application, the processor is further configured to perform steps of:
obtaining a first noise playing time and a first noise receiving time of the first device for a first test noise;
determining a first time difference as a difference between the first noise playing time and the first noise receiving time; and
calculating, according to the first time difference, the first distance between the loudspeaker and the microphone in the first device.

In some embodiments of the present application, the processor is further configured to perform steps of:
obtaining a second noise playing time of the second device for a second test noise and a second noise receiving time of the first device for the second test noise;
determining a second time difference as a difference between the second noise playing time and the second noise receiving time; and
calculating, according to the second time difference, the second distance between the microphone of the first device and the second device.

In some embodiments of the present application, the processor is further configured to perform steps of:
obtaining a first test signal received by the microphone of the first device, where the first test signal is a signal received when the loudspeaker of the first device plays a first test noise; and
obtaining, according to the first test signal, the first loudness at the microphone of the first device.

In some embodiments of the present application, the processor is further configured to perform steps of:
obtaining a second test signal received by the microphone of the first device, where the second test signal is a signal received when the loudspeaker of the second device plays a second test noise; and
obtaining, according to the second test signal, the second loudness at the microphone of the first device.

In some embodiments of the present application, the step of calculating, according to the first distance and the second distance, the loudness attenuation value of the loudspeaker of the second device relative to the loudspeaker of the first device includes:
calculating a distance ratio as a ratio of the first distance to the second distance; and
performing a loudness attenuation calculation according to the distance ratio to obtain the loudness attenuation value of the loudspeaker of the second device relative to the loudspeaker of the first device.

In some embodiments of the present application, performing the loudness attenuation calculation according to the distance ratio to obtain the loudness attenuation value of the loudspeaker of the second device relative to the loudspeaker of the first device comprises: calculating the loudness attenuation value according to a formula P' = 20log₁₀(K), wherein P' represents the loudness attenuation value, and K represents the distance ratio.

In some embodiments of the present application, calculating the loudness adjustment value for the loudspeaker of the second device according to the first loudness, the second loudness, and the loudness attenuation value comprises: calculating a loudness difference as a difference between the first loudness and the second loudness; calculating a gain value as a sum of the loudness difference and the loudness attenuation value; and obtaining, according to the gain value, the loudness adjustment value for the loudspeaker of the second device.

In some embodiments of the present application, obtaining the loudness adjustment value for the loudspeaker of the second device according to the gain value comprises: determining a corresponding gain distribution range according to device types of the first device and the second device; performing a gain distribution processing within the gain distribution range of the gain value to obtain a plurality of gain distribution values; and using the plurality of gain distribution values as the loudness adjustment value for the loudspeaker of the second device.

A person skilled in the art will appreciate that all or part of the steps in the various methods of the above-described embodiments may be implemented by a computer program, or by a computer program controlling associated hardware, and such computer program may be stored in a computer-readable storage medium and loaded and executed by a processor.

An embodiment of the present application further provides a storage medium having stored therein a computer program that can be loaded by a processor to perform the steps of any one of the methods provided in the embodiments of the present application.

The storage medium may be a computer-readable storage medium, and may include: a read-only memory (ROM), a random access memory (RAM), a magnetic disk, or an optical disk, etc.

Since the computer program stored in the storage medium can perform the steps of any one of the methods provided in the embodiments of the present application, it can achieve the beneficial effects achievable by the methods provided in the embodiments of the present application, as detailed in the foregoing embodiments, and thus will not be repeated herein.

It will be readily apparent to those skilled in the art, upon consideration of the specification and practice of the embodiments disclosed herein, to implement the embodiments of the present application. The present application is intended to cover any variations, uses, or adaptive changes of the present application, which follow the general principles of the present application and include common general knowledge or conventional technical means in the art not disclosed by the present application.

It should be understood that the present application is not limited to the embodiments already described above and illustrated in the accompanying drawings, and various modifications and changes may be made without departing from the scope thereof.

## Claims

1. A loudness adjustment method, comprising:
detecting a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device;
calculating, according to the first distance and the second distance, a loudness attenuation value of the loudspeaker of the second device relative to the loudspeaker of the first device;
calculating, according to the first loudness, the second loudness, and the loudness attenuation value, a loudness adjustment value for the loudspeaker of the second device;
performing, according to the loudness adjustment value, a loudness equalization adjustment on the second device in a co-broadcasting scenario, wherein in the co-broadcasting scenario, the first device and the second device collaboratively play the same audio.

2. The method according to claim 1, wherein the first distance is detected by:
obtaining a first noise playing time and a first noise receiving time of the first device for a first test noise;
determining a first time difference as a difference between the first noise playing time and the first noise receiving time;
calculating, according to the first time difference, the first distance between the loudspeaker and the microphone in the first device.

3. The method according to claim 1, wherein the second distance is detected by:
obtaining a second noise playing time of the second device for a second test noise and a second noise receiving time of the first device for the second test noise;
determining a second time difference as a difference between the second noise playing time and the second noise receiving time;
calculating, according to the second time difference, the second distance between the microphone of the first device and the second device.

4. The method according to claim 1, wherein the first loudness is detected by:
obtaining a first test signal received by the microphone of the first device, wherein the first test signal is a signal received when the loudspeaker of the first device plays a first test noise; and
obtaining, according to the first test signal, the first loudness at the microphone of the first device.

5. The method according to claim 1, wherein the second loudness is detected by:
obtaining a second test signal received by the microphone of the first device, wherein the second test signal is a signal received when the loudspeaker of the second device plays a second test noise; and
obtaining, according to the second test signal, the second loudness at the microphone of the first device.

6. The method according to claim 1, wherein calculating the loudness attenuation value of the loudspeaker of the second device relative to the loudspeaker of the first device according to the first distance and the second distance comprises:
calculating a distance ratio as a ratio of the first distance to the second distance; and
performing a loudness attenuation calculation according to the distance ratio to obtain the loudness attenuation value of the loudspeaker of the second device relative to the loudspeaker of the first device.

7. The method according to claim 6, wherein performing the loudness attenuation calculation according to the distance ratio to obtain the loudness attenuation value of the loudspeaker of the second device relative to the loudspeaker of the first device comprises:
calculating the loudness attenuation value according to a formula P' = 20log₁₀(K), wherein P' represents the loudness attenuation value, and K represents the distance ratio.

8. The method according to claim 1, wherein calculating the loudness adjustment value for the loudspeaker of the second device according to the first loudness, the second loudness, and the loudness attenuation value comprises:
calculating a difference between the first loudness and the second loudness to obtain a loudness difference;
calculating a sum of the loudness difference and the loudness attenuation value to obtain a gain value; and
obtaining the loudness adjustment value for the loudspeaker in the second device according to the gain value.

9. The method according to claim 8, wherein obtaining the loudness adjustment value for the loudspeaker of the second device according to the gain value comprises:
determining a corresponding gain distribution range according to device types of the first device and the second device;
performing a gain distribution processing within the gain distribution range of the gain value to obtain a plurality of gain distribution values; and
using the plurality of gain distribution values as the loudness adjustment value for the loudspeaker of the second device.

10. The method according to claim 2, wherein calculating the first distance between the loudspeaker and the microphone in the first device according to the first time difference comprises:
calculating the first distance between the loudspeaker and the microphone in the first device according to a formula l₁ = c * *Δ*t₁, wherein c represents a speed of sound, l₁ represents the first distance, and *Δ*t₁ represents the first time difference.

11. The method according to claim 2, wherein calculating the first distance between the loudspeaker and the microphone in the first device according to the first time difference comprises:
calculating the first distance between the loudspeaker and the microphone in the first device according to a formula l₁ = m1 * c * *Δ*t₁, wherein c represents the speed of sound, l₁ represents the first distance, *Δ*t₁ represents the first time difference, and m1 represents a first distance adjustment coefficient.

12. The method according to claim 3, wherein calculating the second distance between the microphone of the first device and the second device according to the second time difference comprises:
calculating the second distance between the microphone of the first device and the second device according to a formula l₂ = c * *Δ*t₂, wherein c represents the speed of sound, l₂ represents the second distance, and *Δ*t₂ represents the second time difference.

13. The method according to claim 3, wherein calculating the second distance between the microphone of the first device and the second device according to the second time difference, includes:
calculating the second distance between the microphone of the first device and the second device according to a formula l₂ = m2 * c * *Δ*t₂, wherein c represents the speed of sound, l₂ represents the second distance, *Δ*t₂ represents the second time difference, and m2 represents a second distance adjustment coefficient.

14. A loudness adjustment apparatus, comprising:
a detection module, configured to detect a first distance between a loudspeaker and a microphone in a first device, a second distance between the microphone of the first device and a second device, a first loudness of a sound played by the first device and received by the microphone of the first device, and a second loudness of a sound played by the second device and received by the microphone of the first device;
a first calculation module, configured to calculate, according to the first distance and the second distance, a loudness attenuation value of the loudspeaker of the second device relative to the loudspeaker of the first device;
a second calculation module, configured to calculate, according to the first loudness, the second loudness, and the loudness attenuation value, a loudness adjustment value for the loudspeaker of the second device; and
an adjustment module, configured to perform, according to the loudness adjustment value, a loudness equalization adjustment on the second device in a co-broadcasting scenario, wherein in the co-broadcasting scenario, the first device and the second device collaboratively play the same audio.

15. The apparatus according to claim 14, wherein the detection module is configured to: obtain a first noise playing time and a first noise receiving time of the first device for a first test noise; determine a first time difference as a difference between the first noise playing time and the first noise receiving time; and calculate, according to the first time difference, the first distance between the loudspeaker and the microphone in the first device.

16. The apparatus according to claim 14, wherein the detection module is configured to: obtain a second noise playing time of the second device for a second test noise and a second noise receiving time of the first device for the second test noise; determine a second time difference as a difference between the second noise playing time and the second noise receiving time; and calculate, according to the second time difference, the second distance between the microphone of the first device and the second device.

17. The apparatus according to claim 14, wherein the detection module is configured to: obtain a first test signal received by the microphone of the first device, wherein the first test signal is a signal received when the loudspeaker of the first device plays a first test noise; and obtain, according to the first test signal, the first loudness at the microphone of the first device.

18. The apparatus according to claim 14, wherein the detection module is configured to: obtain a second test signal received by the microphone of the first device, wherein the second test signal is a signal received when the loudspeaker of the second device plays a second test noise; and obtain, according to the second test signal, the second loudness at the microphone of the first device.

19. A storage medium storing instructions that, when executed by a processor of a computer, cause the computer to perform the method according to any one of claims 1 to 13.

20. An electronic device, comprising:
a memory storing a computer program; and
a processor configured to read the computer program stored in the memory to perform the method according to any one of claims 1 to 13.
